# EUROPEAN PATENT SPECIFICATION

(11) **EP 2 787 755 B1**
(45) Date of publication and mention of the grant of the patent: **24.10.2018**
(21) Application number: 13757067.7
(22) Date of filing: 06.03.2013
(51) Int. Cl.: H04W 72/12, H04W 16/14, H04M 3/28, H04W 84/12, H04W 88/06

(54) **TRANSMISSION METHOD AND SYSTEM FOR ACHIEVING DATA AND VOICE SERVICE COEXISTENCE AND COMMUNICATION DEVICE**
VERFAHREN UND SYSTEM ZUR ERZIELUNG DER KOEXISTENZ VON DATEN- UND SPRACHDIENSTEN SOWIE KOMMUNIKATIONSVORRICHTUNG DAFÜR
PROCÉDÉ ET SYSTÈME DE TRANSMISSION PERMETTANT DE RÉALISER UNE COEXISTENCE DE SERVICE VOCAL ET DE DONNÉES ET DISPOSITIF DE COMMUNICATION

(30) Priority: 06.03.2012 CN 201210056455
(43) Date of publication of application: 08.10.2014
(73) Proprietor: Huawei Device (Dongguan) Co., Ltd., Dongguan, Guangdong 523808 (CN)
(72) Inventor: LIANG, Xinxing, Shenzhen Guangdong 518129 (CN); LIU, Shui, Shenzhen Guangdong 518129 (CN); LI, Xiaoqing, Shenzhen Guangdong 518129 (CN); WEI, Konggang, Shenzhen Guangdong 518129 (CN)
(74) Representative: Goddar, Heinz J.
(86) International application number: PCT/CN2013/072249
(87) International publication number: WO 2013/131478

(56) References cited:
- CN-A- 1 391 368
- CN-A- 101 253 711
- CN-A- 101 599 810
- CN-U- 201 499 315
- US-A1- 2007 184 798
- US-A1- 2007 275 746
- US-A1- 2009 081 962

## Description

### TECHNICAL FIELD

The present invention relates to the field of communications, and in particular, to a transmission method, a system, and a communication device for realizing coexistence of data and voice services.

### BACKGROUND

Wi-Fi (Wireless Fidelity, wireless fidelity) is a short-distance wireless data transmission technology, and is mainly applied to short-distance data transmission in a wireless local area network. An operating frequency band of Wi-Fi is an ISM (Industrial Scientific Medical, industrial scientific medical) frequency band, and an operating frequency ranges from 2.4 GHz to 2.4835 GHz, which is divided into 14 channels. At present, Wi-Fi is widely applied around the world.
DECT (Digital Enhanced Cordless Telecommunications, digital enhanced cordless telecommunications) is a digital communication standard and is mainly applied to a cordless telephone system. An operating frequency band of 2.4 G of the DECT technology is also an ISM frequency band, that is, in a same frequency band as Wi-Fi.
In the prior art, a Wi-Fi chip and a DECT chip are integrated in a same communication product, so that the communication product can simultaneously support short-distance voice and data services. However, because the operating frequency bands of Wi-Fi and DECT are in the same frequency band, interference is generated on each other when Wi-Fi and DECT work together, which deteriorates communication quality.
In the prior art, a method for realizing coexistence of Wi-Fi and DECT is provided. The method is described briefly as follows: setting operating channels for Wi-Fi and DECT to make operating frequency bands of Wi-Fi and DECT as far away from each other as possible, so that Wi-Fi and DECT can work together. However, because Wi-Fi and DECT both work in the ISM frequency band, the frequency bands of Wi-Fi and DECT cannot be too far away from each other. Consequently, when Wi-Fi and DECT work together, mutual interference still exists, which degrades performance of Wi-Fi and DECT and even causes Wi-Fi and DECT fail to work. In another coexistence method, a high-performance filter is added to filter interference from a peer party, which, however, also causes new problems, that is, a high-performance filter needs to be added, raising a high requirement for hardware; the price of the high-performance filter is high, resulting in an overhigh cost; and even that a filter that can completely filter interference from a peer party does not exist at all.

US 2007/184798 A1 discloses a dual-function wireless data terminal. An apparatus for communication includes at least one RF receiver circuit, which is coupled to receive and downconvert first and second RF signals that are transmitted respectively over different, first and second wireless networks in accordance with different, first and second network protocols, so as to output first and second downconverted signals. A sleep windows defined by the WiMAX standard as power saving technique may be used for WLAN transmission and reception.
US 2007/275746 A1 discloses a multi-functional wireless terminal. A communication method includes establishing a first communication session over a first connection between a wireless terminal and a base station (BS) of a long-range wireless data network, which operates in accordance with a first protocol that defines a sequence of time frames. Based on the time frames defined by the BS, time slots are allocated for establishing a second communication session over a second connection between the wireless terminal and a peripheral wireless device, which operates in accordance with a second, short-range time-slotted communication protocol different from the first protocol.

US 2009/081962 A2 discloses a method and apparatus permitting the coexistence of multiple communication links to distinct wireless systems in a client device. A wireless device can determine timing and scheduling of communications with distinct communication systems and can schedule the communication with the distinct communication systems during periods of inactivity in the primary communication system.

### SUMMARY

The present invention provides a transmission method of claim 1 and a transmission system of claim 5 for realizing coexistence of data and voice services, to solve a problem that mutual interference exists and costs are high when Wi-Fi and DECT coexist.

The embodiments of the present invention are implemented as follows: A transmission method for realizing coexistence of data and voice services includes:
acquiring an idle timeslot available when voice transmission is performed by using digital enhanced cordless telecommunications DECT; and
performing wireless fidelity Wi-Fi transmission in the idle timeslot available when voice transmission is performed by using DECT.

Another objective of the embodiments of the present invention is to provide a transmission system for realizing coexistence of data and voice services, where the system includes a wireless fidelity Wi-Fi chip and a digital enhanced cordless telecommunications DECT chip; and the system further includes a synchronizer that is respectively connected to the Wi-Fi chip and the DECT chip, where the synchronizer is configured to acquire an idle timeslot available when voice transmission is performed by using DECT, and control the Wi-Fi chip to perform Wi-Fi transmission in the idle timeslot available when the DECT chip performs voice transmission.

Another objective of the embodiments of the present invention is to provide a communication device, where the communication device includes the transmission system for realizing coexistence of data and voice services.

In the embodiments of the present invention, an idle timeslot available when voice transmission is performed by using DECT is first acquired, and then the idle timeslot available when voice transmission is performed by using DECT is used to perform Wi-Fi transmission, so as to realize coexistence of Wi-Fi and DECT in a time division multiplexing manner. In this way, a mutual interference problem when Wi-Fi and DECT coexist can be solved, a communication capacity of an entire communication system can be significantly improved, and moreover, there is no need to add a high-performance filter, thereby reducing costs for coexistence of Wi-Fi and DECT.

### BRIEF DESCRIPTION OF DRAWINGS

FIG. 1 is an implementation flowchart of a transmission method for realizing coexistence of data and voice services according to an embodiment of the present invention;
FIG. 2 is a schematic diagram of timeslot occupation in DECT transmitting and receiving processes according to an embodiment of the present invention;
FIG. 3 is another schematic diagram of timeslot occupation in DECT transmitting and receiving processes according to an embodiment of the present invention;
FIG. 4 is an implementation flowchart of a transmission method for realizing coexistence of data and voice services according to another embodiment of the present invention;
FIG. 5 is a schematic diagram of time division transmission of Wi-Fi and DECT according to an embodiment of the present invention;
FIG. 6 is a structural block diagram of a transmission system for realizing coexistence of data and voice services according to an embodiment of the present invention; and
FIG. 7 is a structural block diagram of a transmission system for realizing coexistence of data and voice services according to another embodiment of the present invention;

### DESCRIPTION OF EMBODIMENTS

To make the objectives, technical solutions, and advantages of the present invention more comprehensible, the following further describes the present invention in detail with reference to the accompanying drawings and embodiments. It should be understood that the specific embodiments described herein are merely used for describing the present invention, but are not intended to limit the present invention.

In the embodiments of the present invention, coexistence of Wi-Fi and DECT is realized in a time division multiplexing manner. In this way, a mutual interference problem when Wi-Fi and DECT coexist can be solved, a communication capacity of an entire communication system can be significantly improved, and moreover, there is no need to add a high-performance filter, thereby reducing costs for coexistence of Wi-Fi and DECT.

In order to describe the technical solutions of the present invention, specific embodiments are used for description.

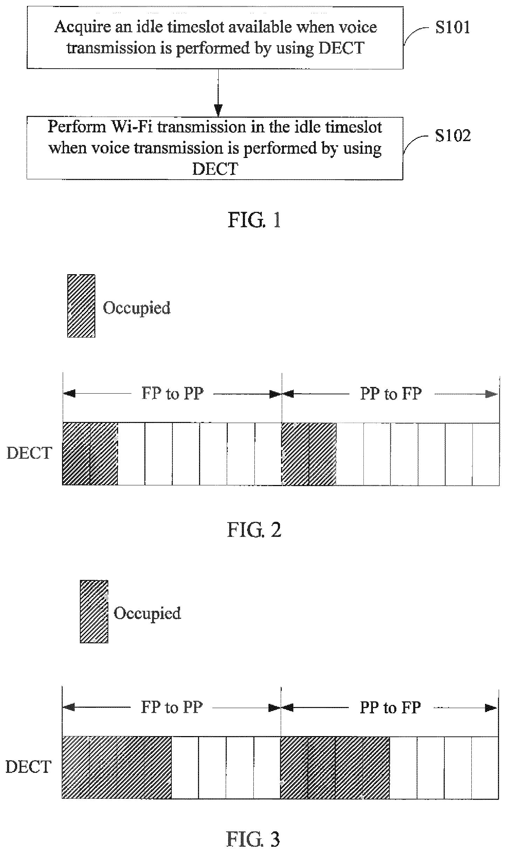

FIG. 1 shows an implementation procedure of a transmission method for realizing coexistence of data and voice services according to an embodiment of the present invention, which is described in detail as follows:
S101: Acquire an idle timeslot available when voice transmission is performed by using DECT.

In this embodiment, in order to describe more clearly a specific process for acquiring the idle transmission timeslot available when voice transmission is performed by using DECT, the following describes a frame structure when voice transmission is performed by using DECT. For voice transmission is performed by using DECT in a 2.4 G system, transmission time of one frame of voice data is fixedly 10 ms, while the transmission time of 10 ms is divided into 16 timeslots (slots). When DECT is used to transmit voice data, double timeslots (Double slots) are used to perform transmission, that is, a same piece of voice data is simultaneously transmitted in two adjacent slots. Therefore, the number of timeslots that are actually used when DECT is used to transmit voice data is 2, and a duration is totally 1.25 ms. The first eight slots are used when a fixed part (Fixed Part, FP) transmits voice data to a portable part (Portable Parts, PP) (a process for transmitting voice data from a fixed part to a portable part is known as FP to PP), and the last eight slots are used when the portable part transmits voice data to the fixed part (a process for transmitting voice data from a portable part to a fixed part is known as PP to FP). FIG. 2 is a schematic diagram of timeslot occupation in a process where voice data is transmitted by using DECT, where DECT occupies the first and the second timeslots among 16 timeslots when voice data is transmitted, and occupies the ninth and the tenth timeslots among the 16 timeslots when voice data is received.

It can be known according to the frame structure when voice transmission is performed by using DECT that, when voice data is transmitted by using DECT, DECT only occupies the first and the second timeslots and the ninth and the tenth timeslots among 16 timeslots. In this way, transmission time of one frame of DECT is divided into four timeslot segments, that is, a first timeslot segment is a timeslot segment occupied for transmission, including the first and the second timeslots occupied by DECT for transmission, totally 1.25 ms; the second timeslot segment is an idle timeslot segment, including the third to the eighth timeslots in an idle state among the 16 timeslots (a timeslot in the idle state is hereinafter referred to as an idle timeslot), and the total duration of the second timeslot segment is 3.75 ms; the third timeslot segment is a timeslot segment occupied for receiving, including the ninth and the tenth timeslots occupied by DECT for receiving, totally 1.25 ms; and the fourth timeslot segment is an idle timeslot segment, including the eleventh to the sixteenth timeslots in the idle state among the 16 timeslots.

In the embodiments of the present invention, for ease of description, continuous idle timeslots are called an idle timeslot segment. When voice data transmission is performed by using DECT, an idle timeslot segment formed by the third to the eighth timeslots and an idle timeslot segment formed by the eleventh to the sixteenth timeslots exist, and a duration of each idle timeslot segment is 3.75 ms.

In this way, the idle timeslot available when voice transmission is performed by using DECT may be acquired according to the frame structure when voice data transmission is performed by using DECT, that is, idle timeslots acquired when voice data transmission is performed by using DECT are the third to the eighth timeslots and the eleventh to the sixteenth timeslots. S102: Perform Wi-Fi transmission in the idle timeslot available when voice transmission is performed by using DECT.

In this embodiment, after the idle timeslot available when voice transmission is performed by using DECT is acquired, the idle timeslot may be used for Wi-Fi transmission. An example is used for description as follows:
When the idle timeslots acquired when voice transmission is performed by using DECT in 101 are the third to the eighth timeslots and the eleventh to the sixteenth timeslots, durations of the idle timeslot segment formed by the third to the eighth timeslots and the idle timeslot segment formed by the eleventh to the sixteenth timeslots are both 3.75 ms. In this way, Wi-Fi transmission may be performed in these idle timeslot segments.

In the embodiment of the present invention, an idle timeslot available when voice transmission is performed by using DECT is first acquired, and then the idle timeslot available when voice transmission is performed by using DECT is used to perform Wi-Fi transmission, that is, coexistence of Wi-Fi and DECT is realized in a time division multiplexing manner. In this way, a mutual interference problem when Wi-Fi and DECT coexist can be solved, a communication capacity of an entire communication system can be significantly improved, and moreover, there is no need to add a high-performance filter, thereby reducing costs for coexistence of Wi-Fi and DECT.

In another embodiment of the present invention, the step of acquiring an idle timeslot available when voice transmission is performed by using DECT specifically includes:
acquiring, according to a frame structure when voice transmission is performed by using DECT and the number of portable parts connected to a device that realizes coexistence of Wi-Fi and DECT, the idle timeslot available when voice transmission is performed by using DECT.

In this embodiment, the frame structure when voice transmission is performed by using DECT is as follows: transmission time of one frame of voice data is fixedly 10 ms, while the transmission time of 10 ms is divided into 16 timeslots (slots). When DECT is used to transmit voice data, double timeslots (Double slots) are used to perform transmission, that is, a same piece of voice data is simultaneously transmitted in two adjacent slots. Therefore, the number of timeslots that are actually used when DECT is used to transmit voice data is 2, and a duration is totally 1.25 ms. The first eight slots are used when a fixed part transmits voice data to a portable part, and the last eight slots are used when the portable part transmits voice data to the fixed part.

When voice data transmission is performed by using DECT, each portable part connected to the device that realizes coexistence of Wi-Fi and DECT occupies two timeslots when transmitting and also occupies two timeslots when receiving. In this way, the idle timeslot available when voice transmission is performed by using DECT may be acquired according to the frame structure when voice transmission is performed by using DECT and the number of the portable parts connected to the device that realizes coexistence of Wi-Fi and DECT. An example is used for description as follows:
It is assumed that the number of the portable parts connected to the device that realizes coexistence of Wi-Fi and DECT is 2. When voice data transmission is performed by using DECT, each portable part occupies two timeslots during voice data transmitting, and each portable part occupies two timeslots during voice data receiving. Because the first 8 timeslots among the 16 timeslots are used when the fixed part transmits voice data to the portable part and the last 8 timeslots are used when the portable part transmits voice data to the fixed part, referring to FIG. 3, among the 16 timeslots included in transmission time of one frame of voice data using DECT, the first to the fourth timeslots are all occupied by DECT for transmitting voice data, the fifth to the eighth timeslots are idle timeslots, the ninth to the twelfth timeslots are all occupied by DECT for receiving voice data, the thirteenth to the sixteenth timeslots are idle timeslots, a duration of an idle timeslot segment formed by the fifth to the eighth continuous idle timeslots is 2.5 ms, and a duration of an idle timeslot segment formed by the thirteenth to the sixteenth continuous idle timeslots is 2.5 ms.

It can be known by using the above manner that, when the number of the portable parts connected to the device that realizes coexistence of Wi-Fi and DECT is 2, idle timeslots available when voice transmission is performed by using DECT, which are acquired according to the frame structure when voice transmission is performed by using DECT and the number of the portable parts connected to the device that realizes coexistence of Wi-Fi and DECT, include the fifth to the eighth timeslots with a duration of 2.5 ms, as well as the thirteenth to the sixteenth timeslots with a duration of 2.5 ms.

In this embodiment, the idle timeslot available when voice transmission is performed by using DECT is acquired according to the frame structure when voice transmission is performed by using DECT and the number of the portable parts connected to the device that realizes coexistence of Wi-Fi and DECT, and the idle timeslot is used for Wi-Fi transmission, so that coexistence of Wi-Fi and DECT can be realized more accurately.

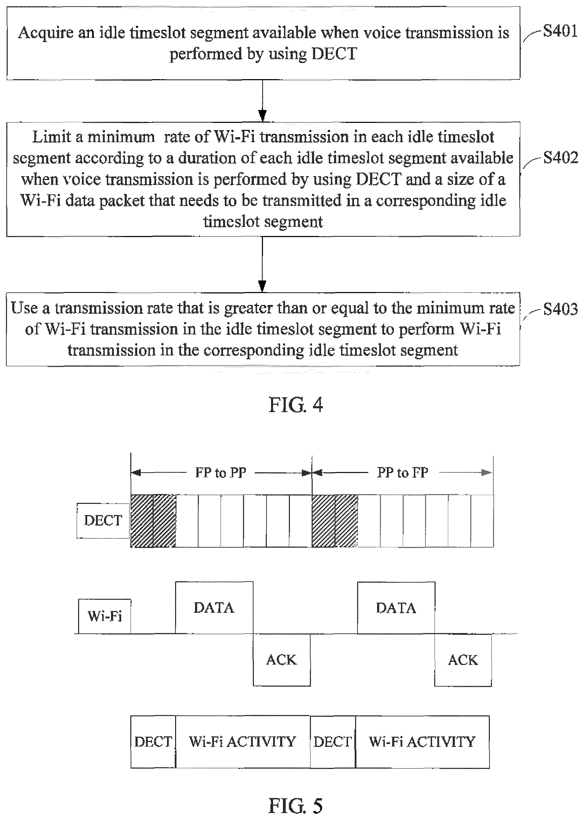

FIG. 4 shows an implementation procedure of a transmission method for realizing coexistence of data and voice services according to another embodiment of the present invention, which is described in detail as follows:
S401: Acquire an idle timeslot segment available when voice transmission is performed by using DECT. The idle timeslot segment available when voice transmission is performed by using DECT refers to continuous idle timeslots available when voice transmission is performed by using DECT. A specific process for acquiring the idle timeslot segment available when voice transmission is performed by using DECT is described above and is not repeated here any further.
S402: Limit a minimum rate of Wi-Fi transmission in each idle timeslot segment according to a duration of each idle timeslot segment available when voice transmission is performed by using DECT and a size of a Wi-Fi data packet that needs to be transmitted in a corresponding idle timeslot segment.

In this embodiment, because sizes of Wi-Fi data packets are different, and different transmission rates may be used for Wi-Fi transmission, time occupied for Wi-Fi data transmission is different. However, time reserved for Wi-Fi transmission during which the idle timeslot available when voice transmission is performed by using DECT is used for Wi-Fi transmission is fixed, it is necessary to limit the minimum rate of Wi-Fi transmission to ensure integrity and accuracy of Wi-Fi transmission.

A specific implementation process for limiting the minimum rate of Wi-Fi transmission according to the duration of each idle timeslot segment available when voice transmission is performed by using DECT and the size of the Wi-Fi data packet that needs to be transmitted in the corresponding idle timeslot segment is as follows:
If the duration of each idle timeslot segment available when voice transmission is performed by using DECT is the same and a size of a Wi-Fi data packet that needs to be transmitted in each idle timeslot segment is also the same, the size of Wi-Fi data packet is divided by the duration of the idle timeslot segment to obtain the minimum rate of Wi-Fi transmission in each idle timeslot segment. After the minimum rate of Wi-Fi transmission in each idle timeslot segment is obtained, the minimum transmission rate may be used as a minimum transmission rate in all the idle timeslot segments.

If the duration of each idle timeslot segment available when voice transmission is performed by using DECT is different, and/or the size of the Wi-Fi data packet that needs to be transmitted in each idle timeslot segment is different, the limiting a minimum rate of Wi-Fi transmission in each idle timeslot segment according to the duration of each idle timeslot segment available when voice transmission is performed by using DECT and a size of a Wi-Fi data packet that needs to be transmitted in a corresponding idle timeslot segment specifically includes: acquiring the duration of each idle timeslot segment available when voice transmission is performed by using DECT. For example, it is assumed that two idle timeslot segments are acquired and the duration of each idle timeslot segment is 3.75 ms.

The size of the Wi-Fi data packet that needs to be transmitted in the corresponding idle timeslot segment is acquired. In this embodiment, because the sizes of Wi-Fi data packets that are transmitted in each idle timeslot segment may be inconsistent, it is necessary to learn the sizes of Wi-Fi data packets that are transmitted in each idle timeslot segment.

The size of the Wi-Fi data packet is divided by the duration of the corresponding idle timeslot segment to obtain the minimum rate of Wi-Fi transmission in the corresponding idle timeslot segment.

To facilitate understanding, the following uses a specific instance to describe the above process provided in this embodiment.

It is assumed that a duration of each idle timeslot segment of two idle timeslot segments acquired is 3.75 ms.

Two common cases in WIFI transmission are used as an example. One type is a Beacon frame used to send broadcast information. A size of the Beacon frame is 61 bytes. Because available time for Wi-Fi transmission is 3.75 ms, these idle timeslot segments are sufficient to transmit the Beacon frame.

Another type is an atom operation in data transmission. Herein, the atom operation refers to an indivisible single object unit. The single object unit may include multiple steps. The included multiple steps, however, are considered as a single indivisible operation. If not all of the steps are completed, the entire operation is considered to be failed. The atom operation generally includes a body part (that is, a frame body) of a medium access control (Medium Access Control, MAC) frame, two short interframe spaces (Short Interframe Space, SIFS), and an acknowledgement frame (ACK).

It is assumed that a size of the framebody of the MAC frame is 1000 bytes (that is, 8000 bits), where two short interframe spaces occupy 20 us in total, and a size of an ACK part is 14 bytes (that is, 112 bits).

For an idle timeslot segment with a duration of 3.75 ms, a permitted minimum transmission rate V is: V = 8112 bits/(3.75 ms - 20 us). The obtained V is about 5.5 Mbps.

In this embodiment, when Wi-Fi transmission is performed, there may be multiple types of data to be transmitted by using Wi-Fi. In this case, multiple types of data need to contend for Wi-Fi resources. Therefore, a contention window corresponding to each idle timeslot segment available when voice transmission is performed by using DECT exists. For example, for an idle timeslot segment with a duration of 3.75 ms, an upper limit of a size of a corresponding contention window is 187 Wi-Fi slots. Because a specific step for calculating a size of the contention window corresponding to each idle timeslot segment belongs to the prior art, the specific step is not further described herein.

In this embodiment, by limiting the minimum rate of Wi-Fi transmission and the size of the contention window, coexistence of DECT and Wi-Fi can be realized by using a time division multiplexing method, improving a communication capacity of the entire system to the greatest extent. Meanwhile, because the minimum rate of Wi-Fi transmission in each idle timeslot segment is limited, data can be transmitted in an integrated and accurate manner when an idle timeslot of DECT is used to perform Wi-Fi transmission.

S403: Use a transmission rate that is greater than or equal to the minimum rate of Wi-Fi transmission in the idle timeslot segment to perform Wi-Fi transmission in the corresponding idle timeslot segment.

In this embodiment, because the minimum rate of Wi-Fi transmission in each idle timeslot segment has been limited in S403, when Wi-Fi transmission is performed in a certain idle timeslot segment, a transmission rate that is greater than or equal to the minimum rate of Wi-Fi transmission in the idle timeslot segment is used to perform Wi-Fi transmission, so that Wi-Fi data transmission can be performed in a fixed time segment in an integrated and accurate manner.

The above method provided in the embodiment of the present invention is applicable to any product that needs to realize coexistence of Wi-Fi and DECT, for example, a product on which Wi-Fi and DECT of 2.4 G share an antenna, or a product on which Wi-Fi and DECT of 2.4 G respectively use a different antenna.

FIG. 5 is a schematic diagram of time division transmission of Wi-Fi and DECT according to an embodiment of the present invention when transmission of coexistent data and voice services is implemented by using a time division multiplexing manner.

As shown in FIG. 5, when voice data transmission is performed by using DECT, Wi-Fi is in a dormant state. In this case, when voice data transmission is performed by using DECT, only the first two slots in a frame are occupied for transmitting, and only the ninth and the tenth slots in a frame are occupied for receiving. Once DECT transmission ends, DECT transmission can be shut down, and meanwhile, Wi-Fi is activated. Wi-Fi can use the third to the eighth slots and the eleventh to the sixteenth slots to perform data transmission.

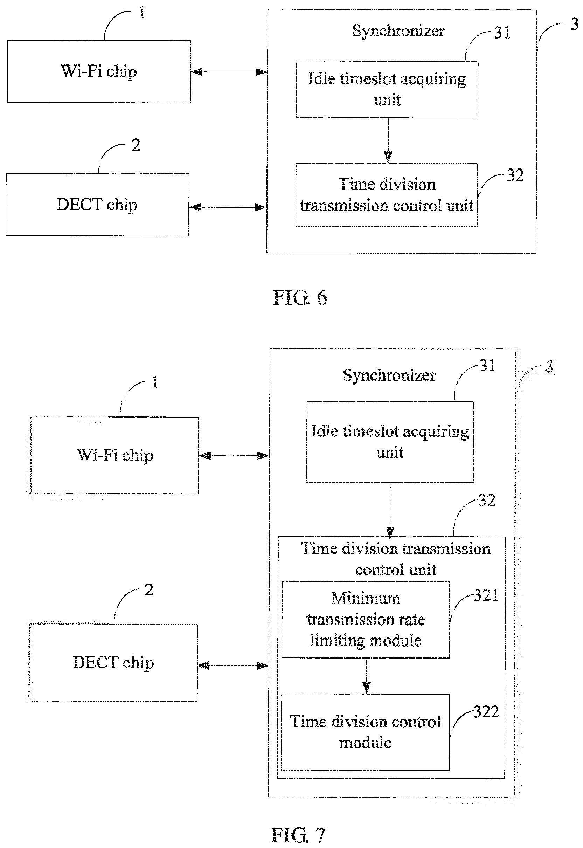

FIG. 6 shows a structure of a transmission system for realizing coexistence of data and voice services according to an embodiment of the present invention. For ease of description, only parts related to the embodiment of the present invention are shown.

This system may be applied to any communication device, such as a wireless router, a set-top box, a fixed-line telephone, and any other communication device related to coexistence of WIFI and DECT, and may be a software unit, a hardware unit, or a unit combining software and hardware that is running in the communication device, and may also be integrated as an independent widget into an application system that is in communication or is running in a communication device.

The transmission system for realizing coexistence of data and voice services includes a Wi-Fi chip 1, a DECT chip 2, and a synchronizer 3 that is respectively connected to the Wi-Fi chip 1 and the DECT chip 2.

Any type of chips that can implement Wi-Fi transmission provided in the prior art may be used as the Wi-Fi chip 1, and any type of chips that can implement DECT transmission provided in the prior art may also be used as the DECT chip 2.

The synchronizer 3 acquires an idle timeslot available when voice transmission is performed by using DECT and controls the Wi-Fi chip to perform Wi-Fi transmission in the idle timeslot available when the DECT chip performs voice transmission, so as to realize coexistence of Wi-Fi and DECT in a time division multiplexing manner.

The synchronizer 3 includes an idle timeslot acquiring unit 31 and a time division transmission control unit 32.

The idle timeslot acquiring unit 31 acquires the idle timeslot available when the DECT chip performs voice transmission. A specific acquiring process is described above and is not repeated here any further.

The time division transmission control unit 32 controls the Wi-Fi chip to perform Wi-Fi transmission in the idle timeslot available when the DECT chip performs voice transmission. A specific control process is described above and is not repeated here any further.

In another embodiment of the present invention, the idle timeslot acquiring unit 31 is specifically configured to acquire, according to a frame structure when the DECT chip performs voice transmission and the number of portable parts connected to a device that realizes coexistence of Wi-Fi and DECT, the idle timeslot available when the DECT chip performs voice transmission. A specific acquiring process is described above and is not repeated here any further.

In another embodiment of the present invention, the idle timeslot acquiring unit 31 is specifically configured to acquire an idle timeslot segment available when the DECT chip performs voice transmission, where the idle timeslot segment is continuous idle timeslots available when voice transmission is performed by using DECT. The idle timeslot segment available when voice transmission is performed by using DECT refers to continuous idle timeslots available when voice transmission is performed by using DECT. A specific process for acquiring the idle timeslot segment available when voice transmission is performed by using DECT is described above and is not repeated here any further.

Referring to FIG. 7, the time division transmission control unit 32 includes a minimum transmission rate limiting module 321 and a time division control module 322.

The minimum transmission rate limiting module 321 limits a minimum rate of Wi-Fi transmission in each idle timeslot segment according to a duration of each idle timeslot segment available when the DECT chip performs voice transmission and a size of a Wi-Fi data packet that needs to be transmitted in a corresponding idle timeslot segment.

The time division control module 322 controls the Wi-Fi chip to use a transmission rate that is greater than or equal to the minimum rate of Wi-Fi transmission in the idle timeslot segment to perform Wi-Fi transmission in the corresponding idle timeslot segment.

In another embodiment of the present invention, the minimum transmission rate limiting module 321 is specifically configured to: if the duration of each idle timeslot segment available when voice transmission is performed by using DECT is the same and a size of a Wi-Fi data packet that needs to be transmitted in each idle timeslot segment is also the same, divide the size of Wi-Fi data packet by the duration of the idle timeslot segment to obtain the minimum rate of Wi-Fi transmission in each idle timeslot segment.

In another embodiment of the present invention, the minimum transmission rate limiting module 321 is specifically configured to: if the duration of each idle timeslot segment available when voice transmission is performed by using DECT is different and/or a size of a Wi-Fi data packet that needs to be transmitted in each idle timeslot segment is different, acquire the duration of each idle timeslot segment available when voice transmission is performed by using DECT, acquire the size of the Wi-Fi data packet that needs to be transmitted in the corresponding idle timeslot segment, and divide the size of the Wi-Fi data packet by a duration of the corresponding idle timeslot segment to obtain the minimum rate of Wi-Fi transmission in the corresponding idle timeslot segment.

It should be noted that units included in the foregoing system are divided only according to functional logic, but are not limited to the above division as long as corresponding functions can be implemented. In addition, specific names of functional units are for differentiation only and are not intended to limit the protection scope of the present invention.

A person of ordinary skill in the art may understand that all or a part of the steps of the method embodiments may be implemented by a program instructing relevant hardware. The program may be stored in a computer readable storage medium, such as a ROM/RAM, a magnetic disk, or an optical disc.

In the embodiments of the present invention, an idle timeslot available when voice transmission is performed by using DECT is first acquired, and then the idle timeslot available when voice transmission is performed by using DECT is used to perform Wi-Fi transmission, that is, coexistence of Wi-Fi and DECT is realized in a time division multiplexing manner. In this way, a mutual interference problem when Wi-Fi and DECT coexist can be solved, a communication capacity of an entire communication system can be significantly improved, and moreover, there is no need to add a high-performance filter, thereby reducing costs for coexistence of Wi-Fi and DECT. The idle timeslot available when voice transmission is performed by using DECT is acquired according to a frame structure when voice transmission is performed by using DECT and the number of portable parts connected to a product that realizes coexistence of Wi-Fi and DECT, and the idle timeslot is used for Wi-Fi transmission, so that coexistence of Wi-Fi and DECT can be implemented more accurately. Meanwhile, a minimum rate of Wi-Fi transmission and a size of a contention window are limited, so that data can be transmitted in an integrated and accurate manner when the idle timeslot of DECT is used to perform Wi-Fi transmission.

The foregoing descriptions are merely exemplary embodiments of the present invention, but are not intended to limit the present invention. Any modifications, equivalent replacements, and improvements made within the principle of the present invention shall fall within the protection scope of the present invention.

## Claims

1. A transmission method for realizing coexistence of data and voice services, comprising:
acquiring (S101) an idle timeslot available when voice transmission is performed by using digital enhanced cordless telecommunications, DECT; and
performing (S102) wireless fidelity, Wi-Fi, transmission in the idle timeslot available when voice transmission is performed by using DECT,
wherein the acquiring (S101) an idle timeslot available when voice transmission is performed by using DECT specifically comprises:
acquiring (S401) an idle timeslot segment available when voice transmission is performed by using DECT, wherein the idle timeslot segment is continuous idle timeslots available when voice transmission is performed by using DECT;
wherein the performing (S102) Wi-Fi transmission in the idle timeslot available when voice transmission is performed by using DECT specifically comprises:
limiting (S402) a minimum rate of Wi-Fi transmission in each idle timeslot segment according to a duration of each idle timeslot segment available when voice transmission is performed by using DECT and a size of a Wi-Fi data packet that needs to be transmitted in a corresponding idle timeslot segment; and
using (S403) a transmission rate that is greater than or equal to the minimum rate of Wi-Fi transmission in the idle timeslot segment to perform Wi-Fi transmission in the corresponding idle timeslot segment.

2. The transmission method for realizing coexistence of data and voice services according to claim 1, wherein the acquiring (S101) an idle timeslot available when voice transmission is performed by using DECT specifically comprises:
acquiring, according to a frame structure when voice transmission is performed by using DECT and a number of portable parts connected to a device that realizes coexistence of Wi-Fi and DECT, the idle timeslot available when voice transmission is performed by using DECT.

3. The transmission method for realizing coexistence of data and voice services according to claim 1, wherein if the duration of each idle timeslot segment available when voice transmission is performed by using DECT is the same and a size of the Wi-Fi data packet that needs to be transmitted in each idle timeslot segment is also the same, the limiting a minimum rate of Wi-Fi transmission in each idle timeslot segment according to a duration of each idle timeslot segment available when voice transmission is performed by using DECT and a size of the Wi-Fi data packet that needs to be transmitted in a corresponding idle timeslot segment specifically comprises:
dividing the size of the Wi-Fi data packet by the duration of the idle timeslot segment to obtain the minimum rate of Wi-Fi transmission in each idle timeslot segment.

4. The transmission method for realizing coexistence of data and voice services according to claim 1, wherein if the duration of each idle timeslot segment available when voice transmission is performed by using DECT is different and/or a size of a Wi-Fi data packet that needs to be transmitted in each idle timeslot segment is different, the limiting a minimum rate of Wi-Fi transmission in each idle timeslot segment according to a duration of each idle timeslot segment available when voice transmission is performed by using DECT and a size of a Wi-Fi data packet that needs to be transmitted in a corresponding idle timeslot segment specifically comprises:
acquiring (S101) the duration of each idle timeslot segment available when voice transmission is performed by using DECT;
acquiring the size of the Wi-Fi data packet that needs to be transmitted in the corresponding idle timeslot segment; and
dividing the size of the Wi-Fi data packet by the duration of the corresponding idle timeslot segment to obtain the minimum rate of Wi-Fi transmission in the corresponding idle timeslot segment.

5. A transmission system for realizing coexistence of data and voice services, wherein the system comprises a wireless fidelity Wi-Fi chip (1) and a digital enhanced cordless telecommunications, DECT, chip (2); and the system further comprises a synchronizer (3) that is respectively connected to the Wi-Fi chip (1) and the DECT chip (2), wherein the synchronizer (3) is configured to acquire an idle timeslot available when voice transmission is performed by using DECT, and control the Wi-Fi chip (1) to perform Wi-Fi transmission in the idle timeslot available when the DECT chip performs voice transmission;
wherein the idle timeslot acquiring unit (31) is specifically configured to acquire an idle timeslot segment available when the DECT chip performs voice transmission, wherein the idle timeslot segment is continuous idle timeslots available when voice transmission is performed by using DECT;
wherein the time division transmission control unit (32) comprises:
a minimum transmission rate limiting module (321), configured to limit a minimum rate of Wi-Fi transmission in each idle timeslot segment according to a duration of each idle timeslot segment available when the DECT chip performs voice transmission and a size of a Wi-Fi data packet that needs to be transmitted in a corresponding idle timeslot segment; and
a time division control module (322), configured to control the Wi-Fi chip to use a transmission rate that is greater than or equal to the minimum rate of Wi-Fi transmission in the idle timeslot segment to perform Wi-Fi transmission in the corresponding idle timeslot segment.

6. The transmission system for realizing coexistence of data and voice services according to claim 5, wherein the synchronizer comprises:
an idle timeslot acquiring unit (31), configured to acquire the idle timeslot available when the DECT chip performs voice transmission; and
a time division transmission control unit (32), configured to control the Wi-Fi chip to perform Wi-Fi transmission in the idle timeslot available when the DECT chip performs voice transmission.

7. The transmission system for realizing coexistence of data and voice services according to claim 6, wherein the idle timeslot acquiring unit (31) is specifically configured to acquire, according to a frame structure when the DECT chip performs voice transmission and the number of portable parts connected to a device that realizes coexistence of Wi-Fi and DECT, the idle timeslot available when the DECT chip performs voice transmission.

8. The transmission system for realizing coexistence of data and voice services according to claim 5, wherein the minimum transmission rate limiting module (321) is specifically configured to: if the duration of each idle timeslot segment available when voice transmission is performed by using DECT is the same and a size of a Wi-Fi data packet that needs to be transmitted in each idle timeslot segment is also the same, divide the size of the Wi-Fi data packet by the duration of the idle timeslot segment to obtain the minimum rate of Wi-Fi transmission in each idle timeslot segment.

9. The transmission system for realizing coexistence of data and voice services according to claim 5, wherein the minimum transmission rate limiting module (321) is specifically configured to: if the duration of each idle timeslot segment available when voice transmission is performed by using DECT is different and/or the size of the Wi-Fi data packet that needs to be transmitted in each idle timeslot segment is different, acquire the duration of each idle timeslot segment available when voice transmission is performed by using DECT, acquire the size of the Wi-Fi data packet that needs to be transmitted in the corresponding idle timeslot segment, and divide the size of the Wi-Fi data packet by the duration of the corresponding idle timeslot segment to obtain the minimum rate of Wi-Fi transmission in the corresponding idle timeslot segment.

10. A communication device, wherein the communication device comprises the transmission system for realizing coexistence of data and voice services according to any one of claims 6 to 9.

11. The communication device according to claim 10, wherein the communication device is a wireless router.

## Patentansprüche

1. Übertragungsverfahren zur Erzielung einer Koexistenz von Daten- und Sprachdiensten, umfassend:
Erfassen (S101) eines freien Zeitschlitzes, der verfügbar ist, wenn eine Sprachübertragung unter Verwendung von "Digital Enhanced Cordless Telecommunications" (DECT) durchgeführt wird; und
Durchführen (S102) einer "Wireless Fidelity"(Wi-Fi)-Übertragung in dem freien Zeitschlitz, der verfügbar ist, wenn eine Sprachübertragung unter Verwendung von DECT durchgeführt wird,
wobei das Erfassen (S101) eines freien Zeitschlitzes, der verfügbar ist, wenn eine Sprachübertragung unter Verwendung von DECT durchgeführt wird, insbesondere umfasst:
Erfassen (S401) eines freien Zeitschlitzsegments, das verfügbar ist, wenn eine Sprachübertragung unter Verwendung von DECT durchgeführt wird, wobei es sich bei dem freien Zeitschlitzsegment um kontinuierlich freie Zeitschlitze handelt, die verfügbar sind, wenn eine Sprachübertragung unter Verwendung von DECT durchgeführt wird;
wobei das Durchführen (S102) einer Wi-Fi-Übertragung in dem freien Zeitschlitz, der verfügbar ist, wenn eine Sprachübertragung unter Verwendung von DECT durchgeführt wird, insbesondere umfasst:
Beschränken (S402) einer Wi-Fi-Mindestübertragungsrate in jedem freien Zeitschlitzsegment gemäß einer Dauer von jedem freien Zeitschlitzsegment, das verfügbar ist, wenn eine Sprachübertragung unter Verwendung von DECT durchgeführt wird, und einer Größe eines Wi-Fi-Datenpakets, das in einem entsprechenden freien Zeitschlitzsegment gesendet werden muss; und
Verwenden (S403) einer Übertragungsrate, die größer als oder gleich der Wi-Fi-Mindestübertragungsrate in dem freien Zeitschlitzsegment ist, um eine Wi-Fi-Übertragung in dem entsprechenden freien Zeitschlitzsegment durchzuführen.

2. Übertragungsverfahren zur Erzielung einer Koexistenz von Daten- und Sprachdiensten nach Anspruch 1, wobei das Erfassen (S101) eines freien Zeitschlitzes, der verfügbar ist, wenn eine Sprachübertragung unter Verwendung von DECT durchgeführt wird, insbesondere umfasst:
Erfassen, gemäß einer Rahmenstruktur, wenn eine Sprachübertragung unter Verwendung von DECT durchgeführt wird, und einer Anzahl von tragbaren Teilen, die mit einer Vorrichtung, die eine Koexistenz von Wi-Fi und DECT erzielt, verbunden sind, des freien Zeitschlitzes, der verfügbar ist, wenn eine Sprachübertragung unter Verwendung von DECT durchgeführt wird.

3. Übertragungsverfahren zur Erzielung einer Koexistenz von Daten- und Sprachdiensten nach Anspruch 1, wobei, wenn die Dauer von jedem freien Zeitschlitzsegment, das verfügbar ist, wenn eine Sprachübertragung unter Verwendung von DECT durchgeführt wird, die gleiche ist und eine Größe des Wi-Fi-Datenpakets, das in jedem freien Zeitschlitzsegment übertragen werden muss, ebenfalls die gleiche ist, das Beschränken einer Wi-Fi-Mindestübertragungsrate in jedem freien Zeitschlitzsegment gemäß einer Dauer von jedem freien Zeitschlitzsegment, das verfügbar ist, wenn eine Sprachübertragung unter Verwendung von DECT durchgeführt wird, und einer Größe des Wi-Fi-Datenpakets, das in einem entsprechenden freien Zeitschlitzsegment übertragen werden muss, insbesondere umfasst:
Dividieren der Größe des Wi-Fi-Datenpakets durch die Dauer des freien Zeitschlitzsegments, um die Wi-Fi-Mindestübertragungsrate in jedem freien Zeitschlitzsegment zu erhalten.

4. Übertragungsverfahren zur Erzielung einer Koexistenz von Daten- und Sprachdiensten nach Anspruch 1, wobei, wenn die Dauer von jedem freien Zeitschlitzsegment, das verfügbar ist, wenn eine Sprachübertragung unter Verwendung von DECT durchgeführt wird, unterschiedlich ist und/oder eine Größe eines Wi-Fi-Datenpakets, das in jedem freien Zeitschlitz übertragen werden muss, unterschiedlich ist, das Beschränken einer Wi-Fi-Mindestübertragungsrate in jedem freien Zeitschlitzsegment gemäß einer Dauer von jedem freien Zeitschlitzsegment, das verfügbar ist, wenn eine Sprachübertragung unter Verwendung von DECT durchgeführt wird, und einer Größe eines Wi-Fi-Datenpakets, das in einem entsprechenden Zeitschlitzsegment übertragen werden muss, insbesondere umfasst:
Erfassen (S101) der Dauer von jedem freien Zeitschlitzsegment, das verfügbar ist, wenn eine Sprachübertragung unter Verwendung von DECT durchgeführt wird;
Erfassen der Größe des Wi-Fi-Datenpakets, das in dem entsprechenden freien Zeitschlitzsegment übertragen werden muss; und
Dividieren der Größe des Wi-Fi-Datenpakets durch die Dauer des entsprechenden freien Zeitschlitzsegments, um die Wi-Fi-Mindestübertragungsrate in dem entsprechenden freien Zeitschlitzsegment zu erhalten.

5. Übertragungssystem zur Erzielung einer Koexistenz von Daten- und Sprachdiensten, wobei das System einen "Wireless Fidelity"(Wi-Fi)-Chip (1) und einen "Digital Enhanced Cordless Telecommunications"(DECT)-Chip (2) aufweist; und das System ferner einen Synchronisator (3) aufweist, der jeweils mit dem Wi-Fi-Chip (1) und dem DECT-Chip (2) verbunden ist, wobei der Synchronisator (3) dafür ausgelegt ist, einen freien Zeitschlitz, der verfügbar ist, wenn eine Sprachübertragung unter Verwendung von DECT durchgeführt wird, zu erfassen und den Wi-Fi-Chip (1) zu steuern, um eine Wi-Fi-Übertragung in dem freien Zeitschlitz, der verfügbar ist, wenn der DECT-Chip eine Sprachübertragung durchführt, durchzuführen;
wobei die Einheit (31) zur Erfassung des freien Zeitschlitzes insbesondere dafür ausgelegt ist, ein freies Zeitschlitzsegment zu erfassen, das verfügbar ist, wenn der DECT-Chip eine Sprachübertragung durchführt, wobei es sich bei dem freien Zeitschlitzsegment um kontinuierlich freie Zeitschlitze handelt, die verfügbar sind, wenn eine Sprachübertragung unter Verwendung von DECT durchgeführt wird; wobei die Einheit (32) zur Steuerung der Zeitmultiplexübertragung aufweist:
ein Modul (321) zur Beschränkung der Mindestübertragungsrate, das dafür ausgelegt ist, eine Mindestübertragungsrate einer Wi-Fi-Übertragung in jedem freien Zeitschlitzsegment gemäß einer Dauer von jedem freien Zeitschlitzsegment, das verfügbar ist, wenn der DECT-Chip eine Sprachübertragung durchführt, und einer Größe eines Wi-Fi-Datenpakets, das in einem entsprechenden freien Zeitschlitzsegment übertragen werden muss, zu beschränken; und
ein Modul (322) zur Zeitmultiplexsteuerung, das dafür ausgelegt ist, den Wi-Fi-Chip so zu steuern, dass er eine Übertragungsrate, die größer als oder gleich der Wi-Fi-Mindestübertragungsrate in dem freien Zeitschlitzsegment ist, verwendet, um eine Wi-Fi-Übertragung in dem entsprechenden freien Zeitschlitzsegment durchzuführen.

6. Übertragungssystem zur Erzielung einer Koexistenz von Daten- und Sprachdiensten nach Anspruch 5, wobei der Synchronisator aufweist:
eine Einheit (31) zur Erfassung eines freien Zeitschlitzes, die dafür ausgelegt ist, den freien Zeitschlitz zu erfassen, der verfügbar ist, wenn der DECT-Chip eine Sprachübertragung durchführt; und
eine Einheit (32) zur Steuerung der Zeitmultiplexübertragung, die dafür ausgelegt ist, den Wi-Fi-Chip zu steuern, um eine Wi-Fi-Übertragung in dem freien Zeitschlitz durchzuführen, der verfügbar ist, wenn der DECT-Chip eine Sprachübertragung durchführt.

7. Übertragungssystem zur Erzielung einer Koexistenz von Daten- und Sprachdiensten nach Anspruch 6, wobei die Einheit (31) zur Erfassung eines freien Zeitschlitzes insbesondere dafür ausgelegt ist, gemäß einer Rahmenstruktur, wenn der DECT-Chip eine Sprachübertragung durchführt, und der Anzahl von tragbaren Teilen, die mit einer Vorrichtung, die eine Koexistenz von Wi-Fi und DECT erzielt, verbunden sind, den freien Zeitschlitz zu erfassen, der verfügbar ist, wenn der DECT-Chip eine Sprachübertragung durchführt.

8. Übertragungssystem zur Erzielung einer Koexistenz von Daten- und Sprachdiensten nach Anspruch 5, wobei das Modul (321) zur Beschränkung der Mindestübertragungsrate insbesondere dafür ausgelegt ist: wenn die Dauer von jedem freien Zeitschlitzsegment, das verfügbar ist, wenn eine Sprachübertragung unter Verwendung von DECT durchgeführt wird, die gleiche ist und eine Größe eines Wi-Fi-Datenpakets, das in jedem freien Zeitschlitzsegment übertragen werden muss, ebenfalls die gleiche ist, die Größe des Wi-Fi-Datenpakets durch die Dauer des freien Zeitschlitzsegments zu dividieren, um die Wi-Fi-Mindestübertragungsrate in jedem freien Zeitschlitzsegment zu erhalten.

9. Übertragungssystem zur Erzielung einer Koexistenz von Daten- und Sprachdiensten nach Anspruch 5, wobei das Modul (321) zur Beschränkung der Mindestübertragungsrate insbesondere dafür ausgelegt ist: wenn die Dauer von jedem freien Zeitschlitzsegment, das verfügbar ist, wenn eine Sprachübertragung unter Verwendung von DECT durchgeführt wird, unterschiedlich ist und/oder die Größe des Wi-Fi-Datenpakets, das in jedem freien Zeitschlitzsegment übertragen werden muss, unterschiedlich ist, die Dauer von jedem freien Zeitschlitzsegment, das verfügbar ist, wenn eine Sprachübertragung unter Verwendung von DECT durchgeführt wird, zu erfassen, die Größe des Wi-Fi-Datenpakets, das in dem entsprechenden freien Zeitschlitzsegment gesendet werden muss, zu erfassen und die Größe des Wi-Fi-Datenpakets durch die Dauer des entsprechenden freien Zeitschlitzsegments zu dividieren, um die Wi-Fi-Mindestübertragungsrate in dem entsprechenden freien Zeitschlitzsegment zu erhalten.

10. Kommunikationsvorrichtung, wobei die Kommunikationsvorrichtung das Übertragungssystem zur Erzielung einer Koexistenz von Daten- und Sprachdiensten nach einem der Ansprüche 6 bis 9 aufweist.

11. Kommunikationsvorrichtung nach Anspruch 10, wobei die Kommunikationsvorrichtung ein drahtloser Router ist.

## Revendications

1. Procédé de transmission pour réaliser la coexistence de services de données et de voix, comprenant :
l'acquisition (S101) d'un intervalle de temps inactif disponible lorsqu'une transmission de voix est exécutée en utilisant des télécommunications numériques améliorées sans cordon, DECT ; et
l'exécution (S102) d'une transmission Wi-Fi, « Wireless Fidelity », dans l'intervalle de temps inactif disponible lorsque la transmission de voix est exécutée en utilisant des DECT,
dans lequel l'acquisition (S101) d'un intervalle de temps inactif disponible lorsque la transmission de voix est exécutée en utilisant des DECT comprend spécifiquement :
l'acquisition (S401) d'un segment d'intervalle de temps inactif disponible lorsque la transmission de voix est exécutée en utilisant des DECT, dans lequel le segment d'intervalle de temps inactif est composé d'intervalles de temps inactifs continus disponibles lorsque la transmission de voix est exécutée en utilisant des DECT ;
dans lequel l'exécution (S102) de la transmission Wi-Fi dans l'intervalle de temps inactif disponible lorsque la transmission de voix est exécutée en utilisant des DECT comprend spécifiquement :
la limitation (S402) d'un débit minimum de transmission Wi-Fi dans chaque segment d'intervalle de temps inactif selon une durée de chaque segment d'intervalle de temps inactif disponible lorsque la transmission de voix est exécutée en utilisant des DECT et une taille d'un paquet de données Wi-Fi qui doit être transmis dans un segment d'intervalle de temps inactif correspondant ; et
l'utilisation (S403) d'un débit de transmission qui est supérieur ou égal au débit minimum de transmission Wi-Fi dans le segment d'intervalle de temps inactif pour exécuter la transmission Wi-Fi dans le segment d'intervalle de temps inactif correspondant.

2. Procédé de transmission pour réaliser une coexistence de services de données et de voix selon la revendication 1, dans lequel l'acquisition (S101) d'un intervalle de temps inactif disponible lorsque la transmission de voix est exécutée en utilisant des DECT comprend spécifiquement :
l'acquisition, selon une structure de trame lorsque la transmission de voix est exécutée en utilisant des DECT et un nombre de parties portatives connectées à un dispositif qui réalise la coexistence de Wi-Fi et de DECT, de l'intervalle de temps inactif disponible lorsque la transmission de voix est exécutée en utilisant des DECT.

3. Procédé de transmission pour réaliser la coexistence de services de données et de voix selon la revendication 1, dans lequel, si la durée de chaque segment d'intervalle de temps inactif disponible lorsque la transmission de voix est exécutée en utilisant des DECT est la même et une taille du paquet de données Wi-Fi qui doit être transmis dans chaque segment d'intervalle de temps inactif est également la même, la limitation d'un débit minimum de transmission Wi-Fi dans chaque segment d'intervalle de temps inactif selon une durée de chaque segment d'intervalle de temps inactif disponible lorsque la transmission de voix est exécutée en utilisant des DECT et une taille du paquet de données Wi-Fi qui doit être transmis dans un segment d'intervalle de temps inactif correspondant comprend spécifiquement :
la division de la taille du paquet de données Wi-Fi par la durée du segment d'intervalle de temps inactif pour obtenir le débit minimum de transmission Wi-Fi dans chaque segment d'intervalle de temps inactif.

4. Procédé de transmission pour réaliser la coexistence de services de données et de voix selon la revendication 1, dans lequel, si la durée de chaque segment d'intervalle de temps inactif disponible lorsque la transmission de voix est exécutée en utilisant des DECT est différente et/ou une taille d'un paquet de données Wi-Fi qui doit être transmis dans chaque segment d'intervalle de temps inactif est différente, la limitation d'un débit minimum de transmission Wi-Fi dans chaque segment d'intervalle de temps inactif selon une durée de chaque segment d'intervalle de temps inactif disponible lorsque la transmission de voix est exécutée en utilisant des DECT et une taille d'un paquet de données Wi-Fi qui doit être transmis dans un segment d'intervalle de temps inactif correspondant comprend spécifiquement :
l'acquisition (S101) de la durée de chaque segment d'intervalle de temps inactif disponible lorsque la transmission de voix est exécutée en utilisant des DECT ;
l'acquisition de la taille du paquet de données Wi-Fi qui doit être transmis dans le segment d'intervalle de temps inactif correspondant ; et
la division de la taille du paquet de données Wi-Fi par la durée du segment d'intervalle de temps inactif correspondant pour obtenir le débit minimum de transmission Wi-Fi dans le segment d'intervalle de temps inactif correspondant.

5. Système de transmission pour réaliser la coexistence de services de données et de voix, dans lequel le système comprend une puce Wi-Fi, « Wireless Fidelity », (1) et une puce de télécommunications numériques améliorées sans cordon, DECT, (2) ; et le système comprend en outre un synchroniseur (3) qui est respectivement connecté à la puce Wi-Fi (1) et la puce DECT (2), dans lequel le synchroniseur (3) est configuré pour acquérir un intervalle de temps inactif disponible lorsqu'une transmission de voix est exécutée en utilisant des DECT, et commander la puce Wi-Fi (1) pour exécuter une transmission Wi-Fi dans l'intervalle de temps inactif disponible lorsque la puce DECT exécute la transmission de voix ;
dans lequel l'unité d'acquisition d'intervalle de temps inactif (31) est spécifiquement configurée pour acquérir un segment d'intervalle de temps inactif disponible lorsque la puce DECT exécute la transmission de voix, dans lequel le segment d'intervalle de temps inactif est composé d'intervalles de temps inactifs continus disponibles lorsque la transmission de voix est exécutée en utilisant des DECT ;
dans lequel l'unité de commande de transmission par répartition dans le temps (32) comprend :
un module de limitation de débit de transmission minimum (321), configuré pour limiter un débit minimum de transmission Wi-Fi dans chaque segment d'intervalle de temps inactif selon une durée de chaque segment d'intervalle de temps inactif disponible lorsque la puce DECT exécute la transmission de voix et une taille d'un paquet de données Wi-Fi qui doit être transmis dans un segment d'intervalle de temps inactif correspondant ; et
un module de commande par répartition dans le temps (322), configuré pour commander la puce Wi-Fi pour utiliser un débit de transmission qui est supérieur ou égal au débit minimum de transmission Wi-Fi dans le segment d'intervalle de temps inactif pour exécuter la transmission Wi-Fi dans le segment d'intervalle de temps inactif correspondant.

6. Système de transmission pour réaliser la coexistence de services de données et de voix selon la revendication 5, dans lequel le synchroniseur comprend :
une unité d'acquisition d'intervalle de temps inactif (31), configurée pour acquérir l'intervalle de temps inactif disponible lorsque la puce DECT exécute la transmission de voix ; et
une unité de commande de transmission par répartition dans le temps (32), configurée pour commander la puce Wi-Fi pour exécuter la transmission Wi-Fi dans l'intervalle de temps inactif disponible lorsque la puce DECT exécute la transmission de voix.

7. Système de transmission pour réaliser la coexistence de services de données et de voix selon la revendication 6, dans lequel l'unité d'acquisition d'intervalle de temps inactif (31) est spécifiquement configurée pour acquérir, selon une structure de trame lorsque la puce DECT exécute la transmission de voix et le nombre de parties portatives connectées à un dispositif qui réalise la coexistence de Wi-Fi et de DECT, l'intervalle de temps inactif disponible lorsque la puce DECT exécute la transmission de voix.

8. Système de transmission pour réaliser la coexistence de services de données et de voix selon la revendication 5, dans lequel le module de limitation de débit de transmission (321) est spécifiquement configuré pour : si la durée de chaque segment d'intervalle de temps inactif disponible lorsque la transmission de voix est exécutée en utilisant des DECT est la même et une taille d'un paquet de données Wi-Fi qui doit être transmis dans chaque segment d'intervalle de temps inactif est également la même, diviser la taille du paquet de données Wi-Fi par la durée du segment d'intervalle de temps inactif pour obtenir le débit minimum de transmission Wi-Fi dans chaque segment d'intervalle de temps inactif.

9. Système de transmission pour réaliser la coexistence de services de données et de voix selon la revendication 5, dans lequel le module de limitation de débit de transmission minimum (321) est spécifiquement configuré pour : si la durée de chaque segment d'intervalle de temps inactif disponible lorsque la transmission de voix est exécutée en utilisant des DECT est différente et/ou la taille du paquet de données Wi-Fi qui doit être transmis dans chaque segment d'intervalle de temps inactif est différente, acquérir la durée de chaque segment d'intervalle de temps inactif disponible lorsque la transmission de voix est exécutée en utilisant des DECT, acquérir la taille du paquet de données Wi-Fi qui doit être transmis dans le segment d'intervalle de temps inactif correspondant, et diviser la taille du paquet de données Wi-Fi par la durée du segment d'intervalle de temps inactif correspondant pour obtenir le débit minimum de transmission Wi-Fi dans le segment d'intervalle de temps inactif correspondant.

10. Dispositif de communication, dans lequel le dispositif de communication comprend le système de transmission pour exécuter la coexistence de services de données et de voix selon l'une quelconque des revendications 6 à 9.

11. Dispositif de communication selon la revendication 10, dans lequel le dispositif de communication est un routeur sans fil.
